# EUROPÄISCHE PATENTSCHRIFT

(11) **EP 1 946 143 B1**
(45) Veröffentlichungstag und Bekanntmachung des Hinweises auf die Patenterteilung: **03.06.2015**
(21) Anmeldenummer: 06793290.5
(22) Anmeldetag: 06.09.2006
(51) Int. Cl.: G01S 7/52, G01S 15/87, G01S 15/93

(54) **VERFAHREN ZUR KALIBRIERUNG EINES ULTRASCHALLSENSORS UND ULTRASCHALLABSTANDSMESSVORRICHTUNG**
METHOD FOR CALIBRATING AN ULTRASONIC SENSOR AND ULTRASONIC DISTANCE MEASURING APPARATUS
PROCEDE D'ETALONNAGE D'UNE SONDE A ULTRASONS ET DISPOSITIF DE MESURE DE DISTANCE PAR ULTRASONS

(30) Priorität: 04.11.2005 DE 102005052633
(43) Veröffentlichungstag der Anmeldung: 23.07.2008
(73) Patentinhaber: ROBERT BOSCH GMBH, 70442 Stuttgart (DE)
(72) Erfinder: PREISSLER, Peter, 36460 Dorndorf (DE)
(86) Internationale Anmeldenummer: PCT/EP2006/066090
(87) Internationale Veröffentlichungsnummer: WO 2007/051665

(56) Entgegenhaltungen:
- EP-A1- 0 312 845
- DE-A1- 3 420 004
- DE-A1- 19 924 755
- US-A1- 2002 047 780

## Beschreibung

### Stand der Technik

Die Erfindung geht aus von einem Verfahren zur Kalibrierung eines Ultraschallsensors und einer Ultraschallabstandsmessvorrichtung nach der Gattung der nebengeordneten Ansprüche. Es sind bereits Abstandserfassungsvorrichtungen mittels Ultraschallsensoren bekannt, bei denen ein Sensor ein Ultraschallsignal aussendet und das Ultraschallsignal von einem Hindernis reflektiert wird. Derselbe Sensor oder ein anderer Sensor empfangen das reflektierte Signal. Aus der Laufzeit des Ultraschallsignals von dem Sensor zu dem Hindernis und wieder zu einem Sensor zurück wird unter Einbeziehung der Schallgeschwindigkeit ein Abstand zu dem Hindernis bestimmt.

Aus der DE 199 24 755 A1 ist eine Abstandserfassungsvorrichtung bekannt, bei der eine zweite Ultraschalleinheit die von der ersten Einheit emittierten Wellensignale als Übersprechsignale empfangen kann. Hierbei ist eine Störungsbestimmungseinrichtung vorgesehen, bei der die Intensität des Übersprechsignals ausgewertet wird. Wird eine vorgegebene Intensitätsschwelle unterschritten, so wird eine Störung festgestellt. Hierdurch kann der Fahrer davor gewarnt werden, dass der Sensor infolge zunehmender Erblindung insbesondere durch Ansammlung von Schnee, Eis oder Schmutz, seine Funktionsfähigkeit verloren hat und möglicherweise ein Hindernis nicht mehr detektieren kann.

### Vorteile der Erfindung

Das erfindungsgemäße Verfahren zur Kalibrierung eines Ultraschallsensors mit den Merkmalen des Anspruchs 1 hat demgegenüber den Vorteil, dass die Empfindlichkeit des Ultraschallsensors in Abhängigkeit von dem empfangenen Übersprechsignal eingestellt wird. Als ein Übersprechsignal wird hierbei ein Ultraschallsignal angesehen, das von einem weiteren, benachbart angeordneten Ultraschallsensor ohne eine Reflexion an einem Hindernis zu dem zu kalibrierenden Ultraschallsensor gelangt ist. Das Übersprechsignal kann hierbei einerseits derjenige Schall sein, der auf direktem Wege durch die Luft zwischen den Sensoren übertragen wird. Ferner ist es auch möglich, dass sich der Schall entlang einem oder durch einen gemeinsamen Träger für die beiden Sensoren ausgebreitet hat. Durch die Anpassung der Empfindlichkeit des zu kalibrierenden Sensors ist es möglich, auf eine Beeinträchtigung der Empfangsleistung des Sensors zu reagieren. Wird der Sensor also durch Schmutz oder Eis in seiner Empfangsleistung beeinträchtigt, kann zumindest in einem gewissen Umfang durch eine Änderung der Empfindlichkeit hierauf reagiert werden. Weiterhin ist es aber auch möglich, auf Alterungsprozesse des Sensors, also insbesondere auf eine abnehmende Empfindlichkeit des Sensors bei zunehmendem Alter, zu reagieren, und die Empfindlichkeit entsprechend nachzuregeln. Durch eine erfindungsgemäße Regelung wird zudem vermieden, dass der Sensor zu empfindlich eingestellt wird. Denn bei einem zu empfindlich eingestellten Sensor werden auch Störsignale, z.B. durch Bodenreflexionen oder durch anderweitige Schallsignale, möglicherweise erfasst, so dass so genannte Pseudohindernisse, also nur vermutete, aber nicht vorhandene Hindernisse, eine Ausgabe einer Warnung im Fahrzeug verursachen können. Durch die Anpassung der Empfindlichkeit an die Leistungsfähigkeit des Sensors können solche unnötigen Warnungen vermieden werden.

Durch die in den Unteransprüchen aufgeführten Maßnahmen sind vorteilhafte Weiterbildungen und Verbesserungen des im Hauptanspruch angegebenen Verfahrens möglich. Besonders vorteilhaft ist es, mit einer abnehmenden Amplitude die Empfindlichkeit des Sensors zu erhöhen. Insbesondere ist es möglich, die Empfindlichkeit des Sensors linear mit der abnehmenden Amplitude zu erhöhen. Hierdurch ist eine gute Anpassung der Empfindlichkeit möglich.

Weiterhin ist es vorteilhaft, bei einem Unterschreiten einer vorgegebenen Größe der Amplitude eine Fehlermeldung auszugeben. Hierdurch wird erreicht, dass bei einer zu starken Störung des Sensors nicht mehr versucht wird, eine Messung durchzuführen. Unterhalb dieser Grenze kann ein ordnungsgemäßes Funktionieren des Sensors infolge einer zu großen Dämpfung oder einer anderweitigen Störung nicht mehr gewährleistet werden.

Es ist ferner vorteilhaft, einen gespeicherten Wert für den Vergleich mit der Amplitude des empfangenen Signals in einem gesonderten Kalibrierschritt einzustellen. Dieser gesonderte Kalibrierschritt erfolgt möglichst unter guten Bedingungen, bei denen die Empfangsmöglichkeiten des Sensors optimal sein sollten. Hierdurch kann die Schallübertragung eines Übersprechsignals gut erfasst werden. Durch die gesonderte Kalibrierung kann dabei der für den Vergleich verwendete Wert an die tatsächlichen Einbauverhältnisse des Sensors angepasst werden. Einerseits kann hierdurch eine fertigungsbedingte Streuung korrigiert werden, andererseits ist es insbesondere bei Nachrüstgeräten möglich, nach dem Einbau zunächst eine Kalibrierung durchzuführen.

Weiterhin ist eine Ultraschallabstandsmessvorrichtung vorteilhaft, bei der insbesondere die Sensoren in einem Stoßfänger des Fahrzeugs angeordnet sind. Hierdurch sind eine leichte Montage und insbesondere auch eine leichte Nachrüstbarkeit der Sensoren gegeben.

Es ist ferner vorteilhaft, für die Speicherung des Wertes für den Vergleich mit der Amplitude des empfangenen Signals einen nichtflüchtigen Speicher vorzusehen. Hierdurch steht der Wert auch nach einem Abschalten des Fahrzeugs zur Verfügung.

### Zeichnung

Ausführungsbeispiele der Erfindung sind in der Zeichnung dargestellt und in der nachfolgenden Beschreibung näher erläutert. Es zeigen
Figur 1 eine schematische Darstellung eines Hecks eines Fahrzeugs in einer Aufsicht,
Figur 2 eine schematische Darstellung eines Abstandssensors in einer Detailansicht,
Figur 3 eine Darstellung einer Hüllkurve eines Empfangssignals eines Ultraschallsensors mit in erfindungsgemäßer Weise festgelegten Empfindlichkeiten,
Figuren 4 und 5 Ausführungsbeispiele für die Darstellung einer erfindungsgemäßen Abhängigkeit der Empfindlichkeit von dem Vergleich mit einem vorgegebenen Wert, Figur 6 einen Ablauf eines erfindungsgemäßen Verfahrens.

### Beschreibung des Ausführungsbeispiels

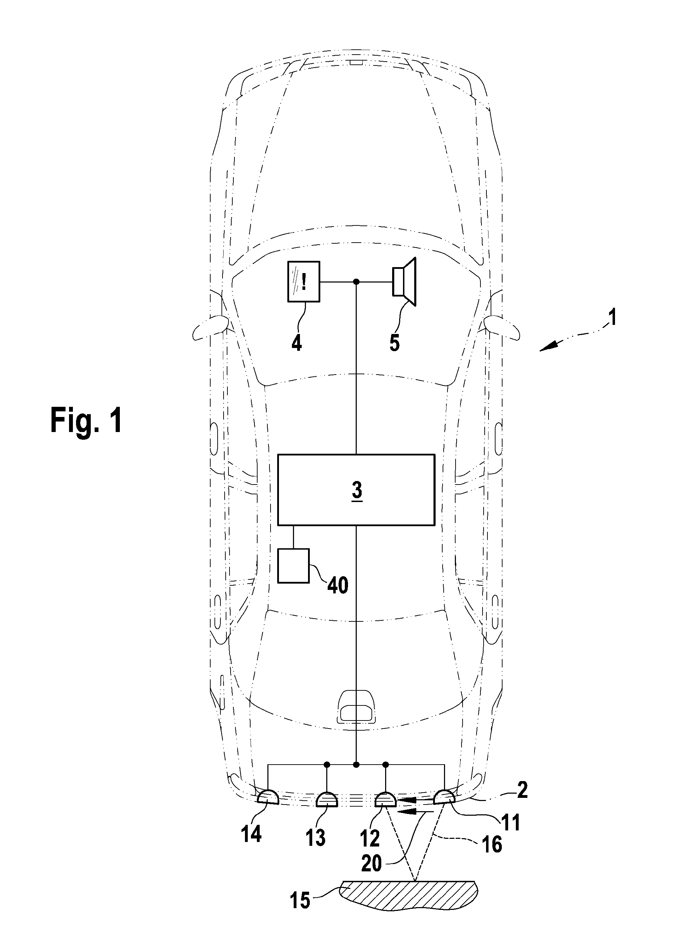

In der Figur 1 ist ein Kraftfahrzeug 1 dargestellt, an dessen hinterem Stoßfänger 2 Ultraschallabstandssensoren montiert sind. Eine entsprechende Anordnung kann auch auf eine Ausführung an einer Fahrzeugvorderseite in entsprechender Weise übertragen werden. Anstelle der Montage im Stoßfänger ist auch eine beliebige andere Montage der Ultraschallsensoren am Fahrzeug denkbar. Die Anordnung an dem Stoßfänger bietet jedoch den Vorteil, dass zunächst die Ultraschallabstandssensoren an dem Stoßfänger montiert und dieser anschließend mit dem Fahrzeug verbunden werden kann.

Bei der hier dargestellten Ausführungsform sind vier Ultraschallabstandssensoren 11, 12, 13, 14 nebeneinander an dem Stoßfänger 2 angeordnet. Hierdurch soll möglichst die gesamte Fahrzeugrückseite mittels der Ultraschallabstandssensoren 11, 12, 13, 14 abgedeckt werden. Die Ultraschallabstandssensoren sind mit einer Auswerteeinheit 3 verbunden, die die Ultraschallabstandssensoren 11, 12, 13, 14 ansteuert und die die von den Ultraschallabstandssensoren gelieferten Messergebnisse auswertet. Die Ultraschallabstandssensoren werden durch die Auswerteeinheit 3 dazu veranlasst, Ultraschallsignale abzustrahlen, die von einem Hindernis reflektiert werden. In dem hier gezeigten Ausführungsbeispiel ist ein Hindernis 15 gestrichelt angedeutet. Eine Hindernismessung könnte z.B. dadurch erfolgen, dass von dem ersten Ultraschallsensor 11 ein Signal 16 ausgesendet wird, das von dem Hindernis 15 reflektiert wird und von dem zweiten Ultraschallsensor 12 empfangen wird (Kreuzechomessung). Wird ein Abstand zu einem Hindernis unterschritten, so veranlasst die Auswerteeinheit 3 eine Ausgabe einer optischen Warnung über eine Anzeige 4 und/oder einer akustischen Warnung über einen Lautsprecher 5.

Wird der erste Ultraschallsensor 11 zum Aussenden eines Ultraschallsignals veranlasst, so werden nicht nur Wellen in Richtung eines Hindernisses abgestrahlt, sondern es können auch Wellen über die Tragekonstruktion des Stoßfängers 2 sowie unmittelbar durch die Luft zu dem zweiten Ultraschallsensor 12 gelangen, ohne an dem Hindernis reflektiert zu werden. In erfindungsgemäßer Weise werden diese unmittelbar an dem ersten Ultraschallsensor 11 zu dem zweiten Ultraschallsensor 12 übertragenen Ultraschallsignale für eine Kalibrierung der Empfindlichkeit des zweiten Ultraschallsensors 12 ausgewertet. In entsprechender Weise kann auch umgekehrt der erste Ultraschallsensor 11 durch den zweiten Ultraschallsensor 12 kalibriert werden. Gleiches gilt für den dritten Ultraschallsensor 13 sowie den vierten Ultraschallsensor 14. Hierbei sind auch Konstruktionen mit mehr oder weniger Ultraschallsensoren in einem Montagebereich möglich, hier z.B. im Bereich des Stoßfängers 2.

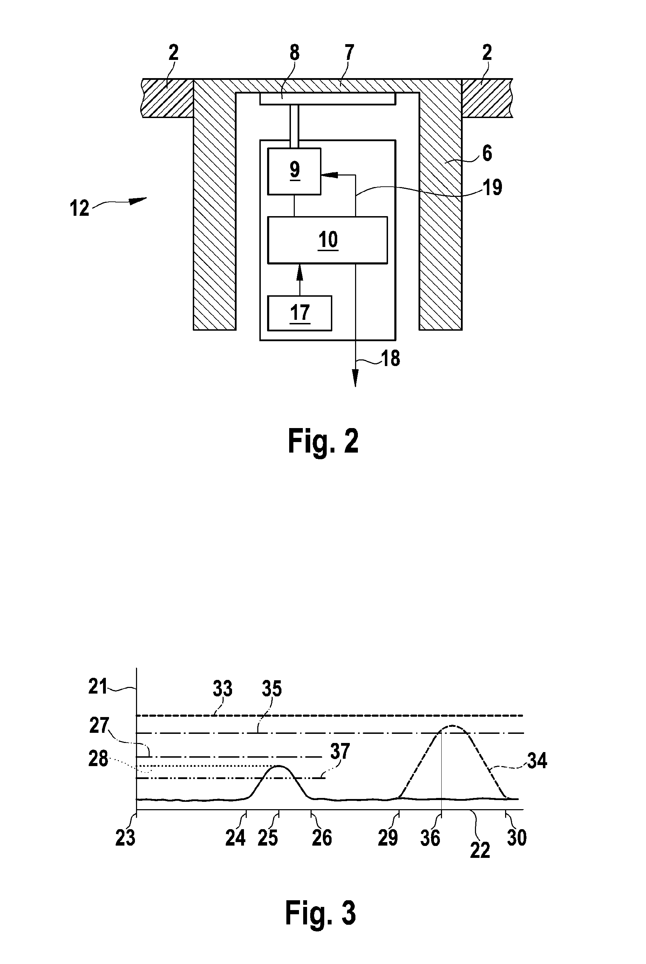

In der Figur 2 ist die Funktionsweise eines Ultraschallsensors, z.B. des ersten Ultraschallsensors 11, im Detail erläutert. Der Ultraschallsensor 11 weist einen topfförmigen Ultraschallwandler 6 auf. Der Ultraschallwandler 6 hat eine Bodenfläche 7, die in den Stoßfänger 2 derart eingelassen ist, dass sie nach außen in Bezug auf das Fahrzeug zeigt, an dem der Ultraschallsensor 11 montiert ist. An der der Außenseite abgewandten Seite der Bodenfläche 7 ist ein Piezoelement 8 angeordnet. Das Piezoelement 8 ist akustisch mit der Bodenfläche 7 gekoppelt. Wird das Piezoelement 8 zu einer Schwingung angeregt, so wird auch die Bodenfläche 7 zu einer Schwingung angeregt. Hiermit können durch das Piezoelement 8 Ultraschallwellen erzeugt und durch eine Resonanz der Bodenfläche 7 an die Umgebung abgegeben werden. Neben der Ausbreitung durch die Luft können sich die Ultraschallsignale auch in dem Stoßfänger 2 fortsetzen. Der Ultraschallsensor 11 arbeitet in der Weise als ein Detektor, dass die Bodenfläche 7 durch Ultraschallwellen auch zu einer Schwingung angeregt werden kann. Diese Schwingung wird an das Piezoelement 8 übertragen, das durch die Schwingungen gestaucht bzw. gedehnt wird, so dass an dem Piezoelement 8 eine elektrische Spannung abgegriffen werden kann. Diese Spannung wird an einen Verstärker 9 geleitet. Von dem Verstärker 9 wird ein Ausgangssignal an eine Auswerteeinheit 10 weitergegeben. In der Auswerteeinheit 10 wird eine Hüllkurve des empfangenen Ultraschallsignals mit einem vorgegebenen Schwellwert verglichen. Ist der Betrag der Amplitude der Hüllkurve größer als der vorgegebene Schwellwert, so wird der Empfang eines Signals detektiert. Der Schwellwert ist hier bevorzugt in einem nichtflüchtigen Speicher 17 abgelegt. Ein Ergebnis einer Detektion eines empfangenen Signals wird über einen Anschluss 18 an die Auswerteeinheit 3 übertragen.

In einer weiteren Ausführungsform ist auch eine indirekte Messung der Amplitude über das Ultraschallsignal selbst möglich. Insbesondere falls die Signalform der Hüllkurve des ausgesendeten Ultraschallsignals stets im Wesentlichen gleich ist, so kann auf die maximale Amplitude der Hüllkurve durch eine Auswertung geschlossen werden, wie oft das Schallsignal einen vorgegebenen Grenzwert überschreitet. Da zwischen den Sensoren stets die gleiche Entfernung vorliegt, kann eine im Allgemeinen abstandsabhängige Signalverbreiterung diese Auswertung nicht beeinträchtigen. Ohne also die absolute, maximale Amplitude zu messen, kann aus der Anzahl der Überschreitungen eines Grenzwerts während des Empfangs eines einzelnen, ausgesendeten Schallpulses jeweils auf dessen maximale Amplitude geschlossen werden: Je öfter das Schallsignal während des Empfangs des Schallpulses den Grenzwert überschreitet, umso höher ist die maximale Amplitude der Hüllkurve des empfangenen Schallpulses. Dieser Bezug kann z.B. in Abhängigkeit von dem Sensortyp bei der Fertigung oder bei einem Einbau der Sensoren in das Fahrzeug festgelegt werden.

In erfindungsgemäßer Weise verfügt die Auswerteeinheit 10 über einen gespeicherten Wert zum Vergleich mit der maximalen Amplitude eines ohne Reflexion von einem benachbarten Sensor erzeugten und unmittelbar zu dem empfangenden Sensor übertragenen Ultraschallsignals. Dieser Wert ist bevorzugt ebenfalls in dem nichtflüchtigen Speicher 17 abgelegt. In Abhängigkeit von einem Wert der Größe der maximalen Amplitude der Hüllkurve dieses Übersprechsignals wird der Verstärker 9 an der Auswerteeinheit 10 nachgeregelt. Sinkt also z.B. das Maximum der erfassten Amplitude der Hüllkurve des Übersprechsignals unter einen vorgegebenen Wert, so erhöht z.B. die Auswerteeinheit 10 über die Rückkopplung 19 den Verstärkungsfaktor des Verstärkers 9. Ein Beispiel für eine entsprechende Regelung ist aus der Figur 3 ersichtlich. Auf der Y-Achse 21 ist die Amplitude der Hüllkurve des empfangenen Ultraschallsignals aufgetragen. Die X-Achse 22 ist die Zeitachse. Zu einem Zeitpunkt 23 sendet der erste Ultraschallsensor 11 ein Schallsignal aus. Dieses Schallsignal breitet sich auch in Richtung der Pfeile 20 gemäß der Figur 1 in Richtung des zweiten Ultraschallsensors 12 aus. Die Auswerteeinheit 3 hat den ersten Ultraschallsensor 11 zur Aussendung veranlasst und schaltet den zweiten Ultraschallsensor 12 zum gleichen Zeitpunkt in eine Empfangsbetriebsart. Der zweite Ultraschallsensor 12 sendet nun kein Signal aus, sondern horcht auf empfangene Signale. Zu einem nachfolgenden Zeitpunkt 24 beginnt die Bodenfläche infolge des angekommenen Übersprechsignals von dem ersten Ultraschallsensor 11 zu vibrieren. Zu einem anschließenden Zeitpunkt 25 wird das Maximum der Amplitude erreicht. Anschließend sinkt die Amplitude bis zu einem Zeitpunkt 26 wieder ab. Ein Grundrauschen ist stets durch allgemeine Schallentwicklung in der Umgebung des Fahrzeugs gegeben. Die Amplitude konnte zu dem Zeitpunkt 25 einen ersten Grenzwert 37 überschreiten. Dieser erste Grenzwert 37 ist für ein Feststellen einer prinzipiellen Funktion des zweiten Ultraschallsensors 12 vorgesehen. Würde dieser erste Grenzwert 37 nicht überschritten, so würde ein Nichtfunktionieren des zweiten Ultraschallsensors 12 festgestellt. Eine weitere Messung wäre dann aufgrund einer zu starken Funktionseinschränkung des zweiten Ultraschallsensors 12 nicht sinnvoll. Eine entsprechende Warnung würde über die Anzeige 4 und/oder den Lautsprecher 5 an den Fahrer ausgegeben.

Ferner ist ein zweiter Wert 27 vorgesehen. Die Amplitude hat jedoch den zweiten Wert 27 nicht überschritten, auch nicht mit ihrem Maximum zu dem Zeitpunkt 25. Die Auswerteeinheit 10 vergleicht das Maximum der empfangenen Amplitude 28 mit dem Wert 27. Hierbei wird festgestellt, dass das Maximum der Amplitude 28 nur etwa 85% der Größe des Wertes 27 aufweist. Infolge dessen wird für eine nachfolgende Abstandsmessung die Empfindlichkeit des Ultraschallsensors erhöht, da der Wert 27 unterschritten wurde. Wie bereits zu der Figur 2 erläutert, kann dies in der Weise erfolgen, dass ein Verstärkungsfaktor des Verstärkers 9 erhöht wird. In einer weiteren Ausführungsform ist es auch möglich, einen Schwellwert in der Auswerteeinheit 10 abzusenken. Die Folgen sind in beiden Fällen prinzipiell gleich. Dies ist am Beispiel eines gestrichelt eingezeichneten, von einem Hindernis reflektierten, Signal erläutert, das nach dem späteren Zeitpunkt 29empfangen wird. Dies könnte z.B. eine Reflexion von dem Hindernis 15 des von dem ersten Sensor 11 ausgesendeten Signals sein. Zwischen den Zeitpunkten 29 und 30 wird ein Ansteigen und wieder ein Absinken der Hüllkurve eines Empfangssignals festgestellt. Hätte das Maximum der Amplitude zu dem Zeitpunkt 25 bei der Kalibrierungsmessung den Wert 27 ergeben, so wäre für eine Signaldetektion ein Schwellwert 33 vorgesehen worden. Das tatsächlich empfangene und verstärkte, von dem Hindernis reflektierte Signal 34 hätte dann den Grenzwert 33 nicht überschritten. Eine Detektion des Signals wäre nicht erfolgt. Aufgrund der Verminderung der Amplitude des Übersprechsignals, die zuvor nur den Wert 28 erreicht hatte, wird entsprechend von der Auswerteeinheit der Schwellwert auf einen Wert 35 vermindert, der niedriger als der Wert 33 ist. Hierdurch kann das empfangene Signal zu einem Zeitpunkt 36 den Schwellwert 35 überschreiten und somit als ein von einem Hindernis reflektiertes Signal detektiert werden. Gleiches wäre auch bei einem konstanten Schwellwert und einer entsprechenden höheren Verstärkung des empfangenen Signals eingetreten.

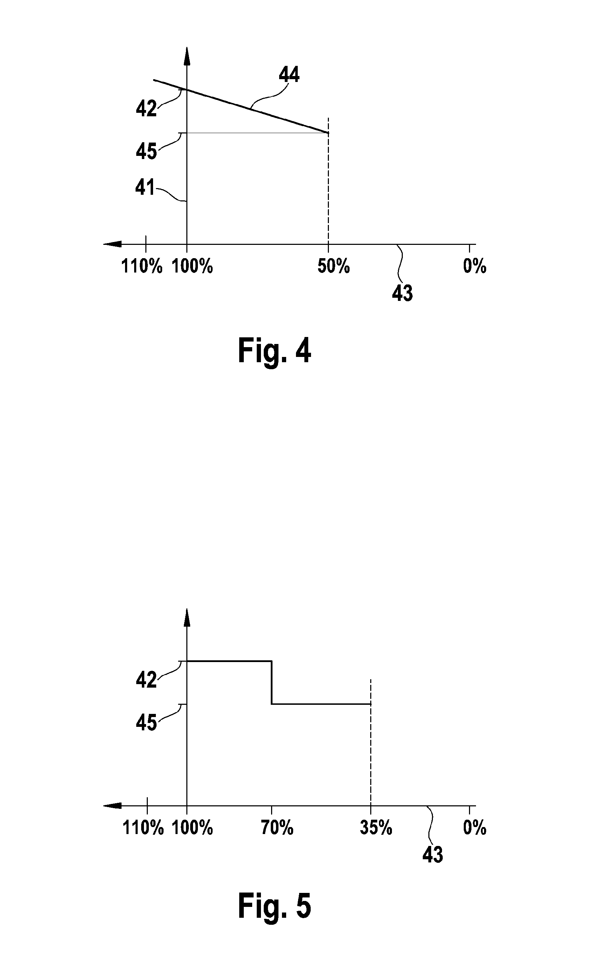

In der Figur 4 ist ein erstes Ausführungsbeispiel für eine Regelung der Abhängigkeit der Empfindlichkeit des Sensors in Abhängigkeit von einem Vergleich mit einem vorgegebenen Wert für die Amplitude des Übersprechsignals dargestellt. Auf der Y-Achse ist die Höhe eines Schwellwerts einheitenlos dargestellt, wobei der Wert 42 einem Schwellwert bei einem vollständig funktionierenden Sensor entsprechen soll. Auf der X-Achse 43 ist das Erreichen des vorgegebenen Wertes 27 prozentual aufgetragen. Mit dem weiteren Fortschreiten nach rechts nimmt die Amplitude des empfangenen, ohne Reflexion übertragenen Übersprechsignals ab. Von einer Amplitude des Übersprechsignals von 100% bis zu einer Amplitude von 50% sinkt der Verlauf des Schwellwertes, den ein empfangenes Signal überschreiten muss, linear entsprechend einer Kurve 44 auf den Wert 45 ab, der beispielsweise 80% des Wertes 42 entspricht. Sinkt die Amplitude unter 50% des vorgegebenen Wertes 27 ab, so wird kein Schwellwert mehr festgelegt, sondern es wird eine Fehlermeldung ausgegeben, dass der Ultraschallsensor möglicherweise gestört ist.

Der Wert 27 für den Vergleich kann vom Hersteller fest vorgegeben werden. Er kann jedoch auch bei einem Einbau der Ultraschallsensoren in das Fahrzeug bei einer Erstmessung eingestellt werden. Ferner ist es auch möglich, durch ein Bedienelement 40 eine Kalibrierung zu veranlassen. Dies sollte möglichst in einer Umgebung geschehen, bei der keine Hindernisse vor den Ultraschallsensoren 11, 12, 13, 14 stehen. Der Wert kann somit aktualisiert in den Speicher 17 geschrieben werden. Bevorzugt sollte aber hierbei darauf geachtet werden, dass ein Mindestwert nicht unterschritten wird. Hierdurch kann sichergestellt werden, dass eine Alterung oder eine Fehlfunktion der Ultraschallsensoren bei einer Kalibrierung Berücksichtigung finden kann.

Je nach den Bedingungen für eine Kalibrierung kann der Wert 27 bei einer nachfolgenden Messung auch überschritten werden. Bei der Ausführungsform gemäß der Figur 4 kann hierbei auch der Schwellwert weiter angehoben und damit die Empfindlichkeit für nachfolgende Messungen gesenkt werden, um Störungen bei der Detektion ausschließen zu können. Die Empfindlichkeit kann dabei in gleicher Weise durch das Erhöhen eines Schwellwertes bzw. durch eine Verkleinerung des Verstärkungsfaktors sowie auch durch eine Kombination beider Maßnahmen in geeigneter Weise angepasst werden.

Selbst wenn bei einer Kalibriermessung in der Nähe des Fahrzeugs Hindernisse vorhanden sind, so ist der Schallweg von dem ersten Ultraschallsensor 11 zu dem zweiten Ultraschallsensor 12 in Pfeilrichtung 20 kürzer als ein Schallsignal, das erst von einem Hindernis 15 reflektiert wird, es sei denn das Hindernis befindet sich sehr nah vor den Ultraschallsensoren. Sollten zwei nah beieinander liegende Maxima in demjenigen Zeitintervall erfasst werden, in dem ansonsten das Signal des benachbarten Sensors hätte empfangen werden sollen, so befindet sich möglicherweise ein Hindernis zu nah am Fahrzeug. Auch in diesem Fall wird in einer bevorzugten Ausführungsform eine Fehlermeldung ausgegeben oder die aktuelle Kalibriermessung wird verworfen.

In der Figur 5 ist ein zweites Ausführungsbeispiel für eine Abhängigkeit dargestellt. In diesem Fall ist die Empfindlichkeit des Ultraschallsensors bis zu einem Absinken des Amplitudenwertes des Übersprechsignals auf 70% des gespeicherten Wertes konstant. Danach wird die Empfindlichkeit in bereits erläuterter Weise um 20% gesenkt, bis die Amplitude einen Wert von 35% des gespeicherten Wertes erreichen sollte. Erst darunter wird eine Fehlermeldung dahingehend ausgegeben, dass der Ultraschallsensor möglicherweise fehlerhaft ist. Das Abhängigkeitsverhältnis kann je nach Ausführung des Sensors entsprechend variiert und in seinem Verlauf angepasst werden.

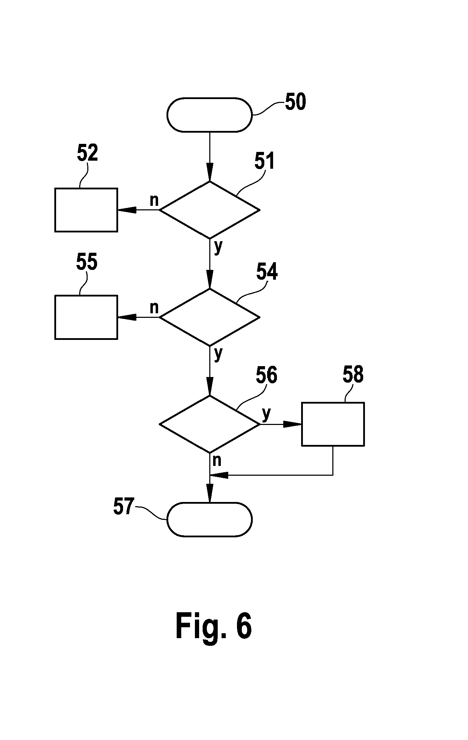

In der Figur 6 ist ein erfindungsgemäßer Verfahrensablauf dargestellt. Das Verfahren kann regelmäßig und insbesondere bei einem Aktivieren der Abstandsmessvorrichtung durchgeführt werden. Ferner kann es auch zusätzlich bei einem Einschalten des Fahrzeugs durchgeführt werden.

In einem Initialisierungsschritt 50 wird der zu kalibrierende Ultraschallsensor in einen Horchbetrieb geschaltet. In einem ersten Prüfschritt 51 wird geprüft, ob ein Signal von einem benachbarten Ultraschallsensor eingetroffen ist. Gegebenenfalls kann auch ein Selbsttest des aussendenden Sensors dahingehend vorgenommen werde, ob zumindest dessen Schwingungsmembran zu einer Schwingung angeregt wird. Wird gar kein Signal empfangen bzw. ausgesendet, so ist wenigstens einer der beiden Sensoren möglicherweise gestört und es wird zu einem Warnschritt 52 verwiesen, bei dem der Benutzer vor einer möglichen Fehlfunktion der Abstandsmessvorrichtung gewarnt wird. Das Verfahren wird mit diesem Schritt beendet. Wird dagegen festgestellt, dass in einem zu erwartenden Zeitfenster ein entsprechendes Übersprechsignal empfangen wird, so wird zu einem zweiten Prüfschritt 54 verzweigt. In dem zweiten Prüfschritt 54 wird überprüft, ob das empfangene Ultraschallsignal einen ersten Grenzwert (Wert 37) überschreitet. Dieser erste Grenzwert 37 kann ebenfalls in dem nichtflüchtigen Speicher 17 fest vorgegeben sein. In einer anderen Ausführungsform ist es auch möglich, für diesen Grenzwert einen vorgegebenen Prozentwert des für den nachfolgenden Vergleich zur Kalibrierung vorgegebenen Wertes zu verwenden. Wird der erste Grenzwert in dem zweiten Prüfschritt 54 unterschritten, so wird zu einem Warnschritt 55 verzweigt, in dem gegebenenfalls ein Benutzer vor einem möglichen Nichtfunktionieren der Abstandsmessvorrichtung gewarnt wird.
Die Ausgabe einer Warnung in einem der Prüfschritte kann auch von einem Zählerstand abhängig ausgelöst werden, so dass eine Warnung nur dann ausgegeben wird, wenn eine vorgegebene Anzahl eines aufeinander folgenden Unterschreitens des ersten Grenzwertes erreicht wird, z.B. fünf Mal.

Wird der erste Grenzwert überschritten, so wird zu einem dritten Prüfschritt 56 weiter verzweigt. In dem dritten Prüfschritt 56 wird ein Vergleich zwischen der Hüllkurve der Amplitude und dem gespeicherten Wert 27 durchgeführt. Anhand der vorgegebenen Abhängigkeit, z.B. gemäß der Figuren 4 und 5, wird dabei ermittelt, ob eine Änderung der Empfindlichkeit des Ultraschallsensors vorgenommen werden muss. Ist dies nicht der Fall, so wird zu einem Endschritt 57 weiter verzweigt. Eine Abstandsmessung zu Hindernissen in der Fahrzeugumgebung kann nun durchgeführt werden. Wird in dem dritten Prüfschritt 56 dagegen festgestellt, dass die Empfindlichkeit des Ultraschallsensors entsprechend der vorgegebenen Vorschrift für die Abhängigkeit der Empfindlichkeit des Ultraschallsensors von dem Verhältnis zwischen dem gespeicherten Wert 27 und der Amplitude 28 nachgeregelt werden muss, so wird zu einem entsprechenden Regelungsschritt 58 verzweigt, in dem die entsprechende Einstellung der Empfindlichkeit vorgenommen wird. Wie bereits anhand der Figuren 2 und 3 erläutert, kann hierbei beispielsweise der Verstärkungsfaktor in dem Verstärker 9 geändert werden. Ferner ist es auch möglich, den in der Auswerteeinheit 10 für eine Detektion von einem Hindernis reflektierten Signals vorgegebenen Schwellwert entsprechend zu variieren. Danach wird zu dem Endschritt 57 verzweigt, an den sich eine Abstandsmessung anschließt. Die Kalibrierung kann nachfolgend für die verschiedenen Ultraschallsensoren 11, 12, 13, 14 vorgenommen werden. Ferner ist es auch möglich, neben einer Kalibrierung zu Beginn des Messverfahrens auch nach vorgegebenen Zeitabständen die Kalibrierung zu wiederholen.

Die Amplitude des Übersprechsignals, das im empfangenden Sensor eintrifft, ist neben der aktuellen Empfindlichkeit des empfangenden Sensors auch von der aktuellen Sendeleistung des sendenden Sensors abhängig, welche z.B. durch Verschmutzung des Senders vermindert sein kann. Das heißt, dass eine geringe Amplitude des Übersprechsignals auch durch eine Dämpfung des sendenden Sensors hervorgerufen werden kann. Um die Empfindlichkeit des empfangenden Sensors trotzdem korrekt zu regeln, können z.B. bei der Einstellung der Empfindlichkeit mehrere, benachbarte Sensoren abwechselnd als Sender fungieren. Auf diese Weise können mehrere Übersprechsignals mit Sollwerten verglichen werden. Die Einstellung der Empfindlichkeit des empfangenden Sensors erfolgt dann mittels eines Algorithmus, der alle Werte berücksichtigt oder in einer anderen Ausführungsform nur den höchsten Wert berücksichtigt.

Eine weitere Möglichkeit ist die Einstellung separater Empfindlichkeiten des empfangenden Sensors für jeden Sender. Die Empfindlichkeit wird dann zunächst nur für einen Kreuzechomodus variiert. Eine Einstellung für einen Direktechomodus kann anschließend durch eine Auswertung der Amplituden von Signalen, die von realen Objekten im Kreuz- und im Direktechomodus zurückgeworfen und empfangen werden.

Anhand der Figur 3 wurde ein Beeinflussen eines festen Schwellwerts für Empfindlichkeit gezeigt. Weiterhin ist es auch möglich, in entsprechender Weise eine Schwellwertkennlinie für die Empfindlichkeit des Ultraschallsensors zu verändern. Die Schwellwertkennlinie wird insbesondere durch Stützstellen beschrieben, die jeweils z.B. linear miteinander verbunden sind. In entsprechender Weise, in der der Schwellwert beispielsweise um 10% gesenkt wird, kann auch der Wert einer entsprechenden Stützstelle um 10% gesenkt werden, so dass sich die Schwellwertkurve entsprechend der Änderung der Stützstellen verschiebt.

Wird eine verringerte Empfindlichkeit in dem dritten Prüfschritt festgestellt, kann neben einer Anpassung der Empfindlichkeit des Ultraschallsensors auch die Reichweite abgesenkt werden, indem z.B. das Hörfenster für eine Hindernisdetektion früher geschlossen wird. Der Fahrer sollte hierbei über die Ausgabemittel 4, 5 auf die verringerte Reichweite hingewiesen werden. Durch die Absenkung der Reichweite wird sichergestellt, dass bei einer größeren Empfindlichkeit Signale von Hindernissen in einer größeren Entfernung nicht versehentlich in einem ebenfalls verstärkten Grundrauschen untergehen und eine Warnung unterbleiben würde, mit der ein Fahrer jedoch aufgrund der sonst üblichen Sensorreichweite hätte rechnen können.

## Patentansprüche

1. Verfahren zur Kalibrierung eines Ultraschallsensors, wobei ein Ultraschallsignal von einem ersten Ultraschallsensor (11) ausgesendet wird, wobei das Signal ohne Reflexion an einem Hindernis zu einem zweiten Ultraschallsensor (12) übertragen und von dem zweiten zu kalibrierenden Ultraschallsensor (12) empfangen wird, **dadurch gekennzeichnet, dass** eine Amplitude des empfangenen Ultraschallsignals mit einem ersten gespeicherten Wert verglichen wird und eine Empfindlichkeit des zweiten Ultraschallsensors (12) in Abhängigkeit von dem Vergleich eingestellt wird.

2. Verfahren nach Anspruch 1, **dadurch gekennzeichnet, dass** die Empfindlichkeit des Sensors (12) erhöht wird, wenn die Amplitude des empfangenen Ultraschallsignals den ersten gespeicherten Wert unterschreitet.

3. Verfahren nach einem der vorhergehenden Ansprüche, **dadurch gekennzeichnet, dass** eine Fehlermeldung ausgegeben wird, wenn die Amplitude des empfangenen Ultraschallsignals einen zweiten Wert nicht überschreitet.

4. Verfahren nach einem der vorhergehenden Ansprüche, **dadurch gekennzeichnet, dass** der erste gespeicherte Wert in einem gesonderten Kalibrierschritt eingestellt wird.

5. Verfahren nach einem der vorhergehenden Ansprüche, **dadurch gekennzeichnet, dass** bei einer höheren eingestellten Empfindlichkeit eine verringerte Reichweite des Sensors (12) festgestellt wird.

6. Ultraschallabstandsmessvorrichtung mit wenigsten einem ersten und einem zweiten Ultraschallsensor, wobei der zweite Ultraschallsensor ein von dem ersten Ultraschallsensor ausgesendetes und ohne Reflektion an einem Hindernis zu dem zweiten Ultraschallsensor gelangtes Ultraschallsignal empfängt, **gekennzeichnet durch** eine Regelungseinheit (10) zum Vergleich einer Amplitude des empfangenen Ultraschallsignals mit einem ersten gespeicherten Wert und zur Regelung einer Empfindlichkeit des zweiten Ultraschallsensor (12) in Abhängigkeit von dem Vergleich.

7. Ultraschallabstandsmessvorrichtung nach Anspruch 6, **dadurch gekennzeichnet, dass** die wenigstens zwei Ultraschallsensoren (11, 12, 13, 14) in einem Stoßfänger (2) eines Fahrzeugs (1) angeordnet sind.

8. Ultraschallabstandsmessvorrichtung nach einem der Ansprüche 6-7, **dadurch gekennzeichnet, dass** die Regelungseinheit (10) ausgelegt ist, die Empfindlichkeit des zweiten Ultraschallsensors (12) bei einem Unterschreiten des ersten gespeicherten Werts durch das Maximum der Amplitude des empfangenen Signals zu erhöhen.

9. Ultraschallabstandsmessvorrichtung nach einem der Ansprüche 6-8, **gekennzeichnet durch** eine Warneinheit (4, 5) zur Ausgabe einer Warnung bei einem Absinken der Amplitude des empfangenen Signals unter einen zweiten, vorgegebenen Wert.

10. Ultraschallabstandsmessvorrichtung nach einem der Ansprüche 6-9, **gekennzeichnet durch** einen nichtflüchtigen Speicher (17) zur Speicherung eines Wertes für einen Vergleich mit der Amplitude des empfangenen Signals

## Claims

1. Method for calibrating an ultrasonic sensor, an ultrasonic signal being emitted by a first ultrasonic sensor (11), the signal being transmitted to a second ultrasonic sensor (12) without reflection at an obstacle and being received by the second ultrasonic sensor (12) to be calibrated, **characterized in that** an amplitude of the received ultrasonic signal is compared with a first stored value and a sensitivity of the second ultrasonic sensor (12) is set on the basis of the comparison.

2. Method according to Claim 1, **characterized in that** the sensitivity of the sensor (12) is increased if the amplitude of the received ultrasonic signal undershoots the first stored value.

3. Method according to one of the preceding claims, **characterized in that** an error message is output if the amplitude of the received ultrasonic signal does not exceed a second value.

4. Method according to one of the preceding claims, **characterized in that** the first stored value is set in a separate calibration step.

5. Method according to one of the preceding claims, **characterized in that** a reduced range of the sensor (12) is determined at a higher set sensitivity.

6. Ultrasonic distance measuring apparatus having at least one first ultrasonic sensor and one second ultrasonic sensor, the second ultrasonic sensor receiving an ultrasonic signal which is emitted by the first ultrasonic sensor and passes to the second ultrasonic sensor without reflection at an obstacle, **characterized by** a control unit (10) for comparing an amplitude of the received ultrasonic signal with a first stored value and for controlling a sensitivity of the second ultrasonic sensor (12) on the basis of the comparison.

7. Ultrasonic distance measuring apparatus according to Claim 6, **characterized in that** the at least two ultrasonic sensors (11, 12, 13, 14) are arranged in a bumper (2) of a vehicle (1).

8. Ultrasonic distance measuring apparatus according to one of Claims 6-7, **characterized in that** the control unit (10) is designed to increase the sensitivity of the second ultrasonic sensor (12) if the first stored value is undershot by the maximum of the amplitude of the received signal.

9. Ultrasonic distance measuring apparatus according to one of Claims 6-8, **characterized by** a warning unit (4, 5) for outputting a warning when the amplitude of the received signal falls below a second, predefined value.

10. Ultrasonic distance measuring apparatus according to one of Claims 6-9, **characterized by** a nonvolatile memory (17) for storing a value for a comparison with the amplitude of the received signal.

## Revendications

1. Procédé de calibrage d'un capteur d'ultrasons, un signal ultrasonique étant émis par un premier capteur d'ultrasons (11), le signal étant transmis sans réflexion sur un obstacle à un deuxième capteur d'ultrasons (12) et reçu par le deuxième capteur d'ultrasons (12) à calibrer, **caractérisé en ce qu'**une amplitude du signal ultrasonique reçu est comparée avec une première valeur mémorisée et une sensibilité du deuxième capteur d'ultrasons (12) est réglée en fonction de la comparaison.

2. Procédé selon la revendication 1, **caractérisé en ce que** la sensibilité du capteur (12) est augmentée lorsque l'amplitude du signal ultrasonique reçu devient inférieure à la première valeur mémorisée.

3. Procédé selon l'une des revendications précédentes, **caractérisé en ce qu'**un message d'erreur est délivré lorsque l'amplitude du signal ultrasonique reçu ne dépasse pas une deuxième valeur.

4. Procédé selon l'une des revendications précédentes, **caractérisé en ce que** la première valeur mémorisée est réglée dans une étape de calibrage distincte.

5. Procédé selon l'une des revendications précédentes, **caractérisé en ce que** dans le cas où la sensibilité réglée est plus élevée, une portée plus faible du capteur (12) est fixée.

6. Dispositif de mesure de distance aux ultrasons comprenant au moins un premier et un deuxième capteur d'ultrasons, le deuxième capteur d'ultrasons recevant un signal ultrasonique émis par le premier capteur d'ultrasons et parvenant au deuxième capteur d'ultrasons sans réflexion sur un obstacle, **caractérisé par** une unité de régulation (10) destinée à comparer une amplitude du signal ultrasonique reçu avec une première valeur mémorisée et à réguler une sensibilité du deuxième capteur d'ultrasons (12) en fonction de la comparaison.

7. Dispositif de mesure de distance aux ultrasons selon la revendication 6, **caractérisé en ce que** les au moins deux capteurs d'ultrasons (11, 12, 13, 14) sont disposés dans un amortisseur (2) d'un véhicule (1).

8. Dispositif de mesure de distance aux ultrasons selon l'une des revendications 6 à 7, **caractérisé en ce que** l'unité de régulation (10) est conçue pour augmenter la sensibilité du deuxième capteur d'ultrasons (12) dans le cas où le maximum de l'amplitude du signal reçu devient inférieur à la première valeur mémorisée.

9. Dispositif de mesure de distance aux ultrasons selon l'une des revendications 6 à 8, **caractérisé par** une unité d'avertissement (4, 5) destinée à délivrer un avertissement dans le cas d'une baisse de l'amplitude du signal reçu au-dessous d'une deuxième valeur prédéfinie.

10. Dispositif de mesure de distance aux ultrasons selon l'une des revendications 6 à 9, **caractérisé par** une mémoire non volatile (17) servant à la mise en mémoire d'une valeur pour une comparaison avec l'amplitude du signal reçu.
